# EUROPEAN PATENT SPECIFICATION

(11) **EP 2 218 919 B1**
(45) Date of publication and mention of the grant of the patent: **02.07.2014**
(21) Application number: 08845245.3
(22) Date of filing: 30.10.2008
(51) Int. Cl.: F16B 1/02, F16H 7/04, G12B 5/00, F16B 2/18

(54) **CLAMP MECHANISM AND SLIDER MECHANISM**
KLEMMENMECHANISMUS UND SCHIEBEMECHANISMUS
MÉCANISME DE BLOCAGE ET MÉCANISME DE COULISSEMENT

(30) Priority: 31.10.2007 JP 2007283233
(43) Date of publication of application: 18.08.2010
(73) Proprietor: THK CO., LTD., Tokyo 141-8503 (JP)
(72) Inventor: HIROTA, Jun, Tokyo 141-8503 (JP)
(74) Representative: Grünecker, Kinkeldey, Stockmair & Schwanhäusser
(86) International application number: PCT/JP2008/069756
(87) International publication number: WO 2009/057694

(56) References cited:
- DE-B3-102004 040 434
- DE-U1- 29 921 309
- JP-A- 8 256 902
- JP-A- 2005 351 331
- JP-U- 2 069 616
- JP-U- 6 087 754
- JP-U- 6 087 754
- US-A1- 2004 134 331

## Description

### TECHNICAL FIELD

The present invention relates to a clamp mechanism and a slider mechanism.

### BACKGROUND ART

Conventionally, a slider mechanism having a pair of sliders connected to each other by a wire and slidably provided on a slide rail in a synchronized state generally includes a clamp structure for fixing the sliders by clamping the wire (for example, see Non-Patent Document 1).

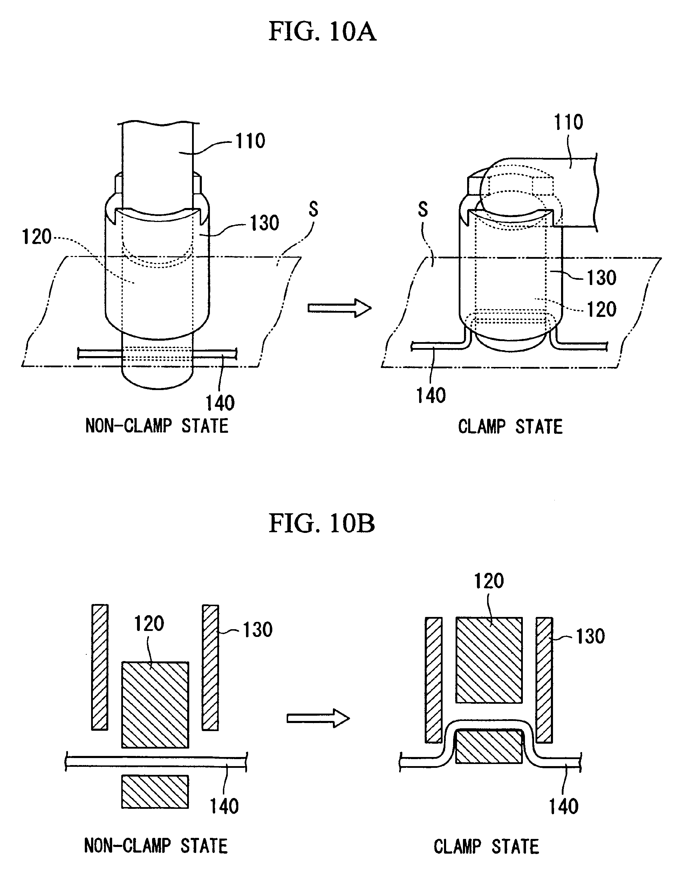

A schematic structure of a conventional clamp mechanism will be described with reference to FIGS. 10A and 10B. FIG 10A is a diagrammatical view of the clamp mechanism, and FIG10B is a cross-sectional view of the clamp mechanism. A case in which a clamp mechanism is provided at one slider will be described below.

Furthermore, JP 06-087754 U discloses a rope adjuster having an outer cylinder and an inner cylinder, which is accommodated inside the outer cylinder and pretensioned therein. Both cylinders have a rope insertion hole respectively, wherein the rope provided through those insertion holes is pinched due to the pretension of the inner cylinder. When the inner cylinder is pushed into the outer cylinder, the rope is released and free to move relative to both cylinders. JP 2005-351331 A discloses a clamp according to the preamble of claim 1 and which enables clamp of a shaft. This clamp comprises a body, a pressing member, and the operation member. The body comprises an insertion hole in which the shaft member is inserted and a communication hole part opening to the outside and communicating with the insertion hole 6. The pressing member 4 is disposed in the communication hole part so as to be advanced and retreated, and presses the outer peripheral surface of the shaft member J by moving so that its tip is projected from the insertion hole 6.

As shown in FIGS. 10A and 10B, the conventional clamp mechanism includes a piston 120 provided to be raised or lowered according to an operation of a lever 110, a case 130 for covering the piston 120, and a wire 140 passing through the piston 120 and the case 130. The wire 140 connects sliders S to each other in a ring shape at a region which is not shown in the figure. In addition, the sliders S are fixed to the case 130. Accordingly, the sliders S can move relative to the wire 140 together with the case 130. As a result, the sliders S move on slide rails in a synchronized state.

Specifically, when the lever 110 is in a non-clamp state in which the lever is raised (an extension direction of the lever 110 is consistent with that of the piston 120), the piston 120 and the case 130 can move relative to the wire 140. That is, as described above, the sliders S connected to the wire 140 can move on the rails. Meanwhile, when the lever 110 is in a clamp state in which the lever 110 is lowered (the extension direction of the lever 110 is perpendicular to that of the piston 120), the piston 120 is raised. In this case, the wire 140 passing through the inside of the piston 120 is drawn up into the case 130 together with the piston 120 (see FIG. 10B). Accordingly, the wire 140 is inserted between an inner wall of the case 130 and the piston 120 and maintained (clamped) thereat. Thus, movement of the sliders S can be restricted by clamping the wire 140.

[Non-Patent Document 1] http://fratellicecchetto.com

### DISCLOSURE OF THE INVENTION

### [Problem to be Solved by the Invention]

In the clamp mechanism as described above, since the wire 140 may deteriorate over time, maintenance such as an exchange operation is required. However, in a conventional clamp mechanism, since a portion of the wire 140 is hidden by the sliders S, it is difficult to smoothly exchange the wire 140. Accordingly, a maintenance property may be degraded.

The present invention is proposed in light of the above problems and has the object of providing a clamp mechanism and a slider mechanism with an excellent maintenance property and high reliability.

### [Means for Solving the Problem]

The present invention adopts the configuration hereafter to achieve the above object.

A clamp mechanism in accordance with the present invention includes a case, a lever and a piston which is provided to be raised or lowered in the case, and moves in the case according to an operation of the lever, wherein the case is connected to a movable body, the clamp mechanism further comprises a wire passing through the case, the wire is provided between the movable body and the piston inside the case, the wire is deformed by pushing the piston into the case and is pushed toward the side of the movable body inside the case so as to keep a relative position between the movable body and the wire.

According to the clamp mechanism of the present invention, if the clamp mechanism is used to clamp sliders sliding on rails, the wire can be disposed on a surface of the slider opposite to the rail. As a result, the wire can be conveniently exchanged and a good maintenance property can be achieved.

A slider mechanism of the present invention includes a pair of sliders slidably provided on the rail and having a space therebetween capable of increasing or decreasing in a synchronized state, and at least one of the sliders has the clamp mechanism described above.

According to the slider mechanism of the present invention, since the wire is disposed on the surface of the slider opposite to the rail, the wire can be conveniently exchanged to accomplish a good maintenance property.

In addition, in the slider mechanism, the lever may include a first surface which abuts the piston to maintain the piston at the clamp position of the wire, and a second surface which maintains the piston at the non-clamp position of the wire. A transition part between the first surface and the second surface may be formed in a rounded shape so that the piston can slidably move between the first surface and the second surface.

According to the above structure, as the first and second surfaces to abut the piston, the lever may be pivoted with respect to the case to make it possible to readily change the clamp state or the non-clamp state of the wire. Accordingly, it is possible to reliably perform a clamp operation.

Further, since the first surface and the second surface are smoothly connected to each other, a contact surface of the lever with respect to the piston can be smoothly changed between the first surface and the second surface to enable a smooth operation thereof.

Furthermore, in the clamp mechanism, the piston may include a resilient body deformed upon contact with the wire.

According to the above structure, when the piston pushes the wire into the case, the resilient body may be deformed to reduce damage to the wire and securely fix the wire.

### Effect of the Invention

According to the present invention, it is possible to provide a clamp mechanism and a slider mechanism in which a wire can be conveniently exchanged with a new one and an excellent maintenance property is achieved. It is also possible to provide a table having multiple functions such as expansion and contraction of a top plate and an excellent maintenance property.

### [Brief description of drawings]

FIG. 1 illustrates a schematic structure of a clamp mechanism in accordance with the present invention.
FIG. 2 illustrates a structure of a lever.
FIG. 3A is a view for explaining an operation of the clamp mechanism.
FIG. 3B is a view for explaining an operation of the clamp mechanism.
FIG. 3C is a view for explaining an operation of the clamp mechanism.
FIG. 4 illustrates an entire structure of a slider mechanism.
FIG. 5 illustrates primary components of a slider mechanism according to the present invention.
FIG. 6 is a schematic view of a table to which the present invention is applied.
FIG. 7 illustrates primary components of the table.
FIG. 8A is a view for explaining an operation of the table.
FIG. 8B is a view for explaining an operation of the table.
FIG. 8C is a view for explaining an operation of the table.
FIG. 9A is a view for explaining an operation of the table continuing from FIG. 8.
FIG. 9B is a view for explaining an operation of the table continuing from FIG. 8.
FIG. 9C is a view for explaining an operation of the table continuing from FIG. 8.
FIG. 10A is a view showing a structure of a conventional clamp mechanism.
FIG 10B is a view showing a structure of the conventional clamp mechanism.

### [Description of Symbols]

1...Clamp mechanism, 2...Case, 3...Wire, 3a...First wire, 3b...Second wire 4...Piston, 5...Lever, 5A...First surface, 5B...Second surface, 10... Slider mechanism, 11... Slide rail, 12... First slider (Slider) 13... Second slider (Slider), 14...First wire support shaft (Support shaft) 15...Second wire support shaft (Support shaft), 100...Table

### [Best mode for carrying out the invention]

Hereinafter, embodiments of the present invention will be described with reference to the accompanying drawings.

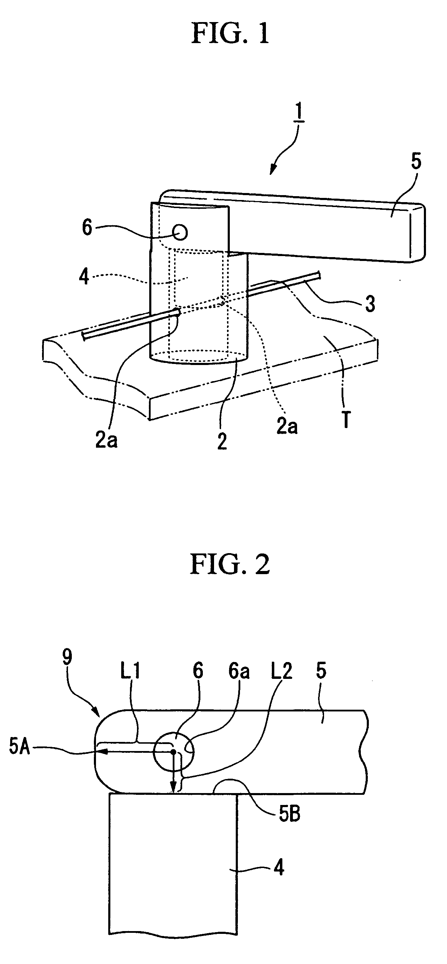

FIG. 1 illustrates a schematic structure of a clamp mechanism according to an exemplary embodiment of the present invention.

### (Clamp Mechanism)

As shown in FIG. 1, a clamp mechanism 1 according to an exemplary embodiment of the present invention includes a case 2, a wire 3 passing through the case 2, a piston 4 provided in the case 2 to be raised or lowered therein, and a lever 5 for operating the piston 4. The clamp mechanism 1 according to an exemplary embodiment of the present invention is applied to a slider mechanism of the present invention which will be described later.

The case 2 is formed, for example, in a cylindrical shape. The piston 4 is formed in a circular column shape and can move along an inner surface of the case 2. A diameter of the piston 4 is slightly smaller than the inner diameter of the case 2, so that unstableness between the piston 4 and the case 2 can be reduced. The case 2 has two through-holes 2a formed therein, and the wire 3, formed of, for example, a metal material, passes through the through-holes 2a. Accordingly, the case 2 can move relative to the wire 3. The wire 3 is located opposite to the lever 5 with respect to the piston 4 provided in the case 2.

A support shaft 6 fastened by a bolt for example is provided at one end of the case 2. The lever 5 is pivotally supported by the support shaft 6. In the clamp mechanism 1, the piston 4 can be moved by using the lever 5 (by operating the lever). That is, the piston 4 in the case 2 is moved toward the wire 3 according to the operation of the lever 5 to maintain the wire 3 which is being pushed into the case 2.

A structure of the lever 5 will now be described. As shown in FIG. 2, a hole 6a through which the support shaft 6 is inserted is formed in one end of the lever 5. That is, the lever 5 on the support shaft can be rotated around the hole 6a when a force is applied to the other end of the lever 5. The piston 4 can be raised or lowered in the case 2 by abutting a side surface of the lever 5.

Specifically, the lever 5 includes a first surface 5A which abuts the piston 4 to maintain the piston 4 at a lock position (a clamp position) of the wire 3, and a second surface 5B which abuts the piston 4 to maintain the piston 4 at a lock-release position (a non-clamp position) of the wire 3. For the convenience of description, it is definded in FIG. 2 that the distance from the first surface 5A to the hole 6a is L1, and the distance from the second surface 5B to the hole 6a is L2. In the present embodiment, the lever 5 is set such that the distance L1 from the first surface 5A to the hole 6a is greater than the distance L2 from the second surface 5B to the hole 6a. That is, the lever 5 is designed to comply with the relationship of L1>L2.

In the clamp mechanism 1 configured as described above, the lock state (a clamp state) and the lock-release state (a non-clamp state) of the wire 3 can be easily realized by pivoting the lever 5 with respect to the case 2 so that the first surface 5A and the second surface 5B can abut the piston 4. As a result, the clamp operation can be performed with a high level of reliability.

In the present embodiment, when the lever 5 is operated, the piston 4 slides between the first surface 5A and the second surface 5B, and a transition part between the first surface 5A and the second surface 5B is formed in a rounded shape. Specifically, as shown in FIG. 2, an angled part 9 of the lever 5 is rounded by round chamfering. Since the first surface 5A is smoothly connected to the second surface 5B, a contact surface (an abutting surface) of the lever 5 with the piston 4 can be smoothly switched between the first surface 5A and the second surface 5B to realize a smooth operation.

In addition, an end of the case 2 opposite to the lever 5 is connected to a movable body T such as a slider, which will be described below (see FIG 1). Since the case 2 can move relative to the wire 3 as described above, the movable body T can also move relative to the wire 3. The clamp mechanism 1 in accordance with an exemplary embodiment of the present invention is different from a conventional clamp mechanism (see FIG. 10), that is, the clamp mechanism 1 in accordance with an exemplary embodiment of the present invention, the wire 3 is provided at a side of the lever 5 with respect to the movable body T.

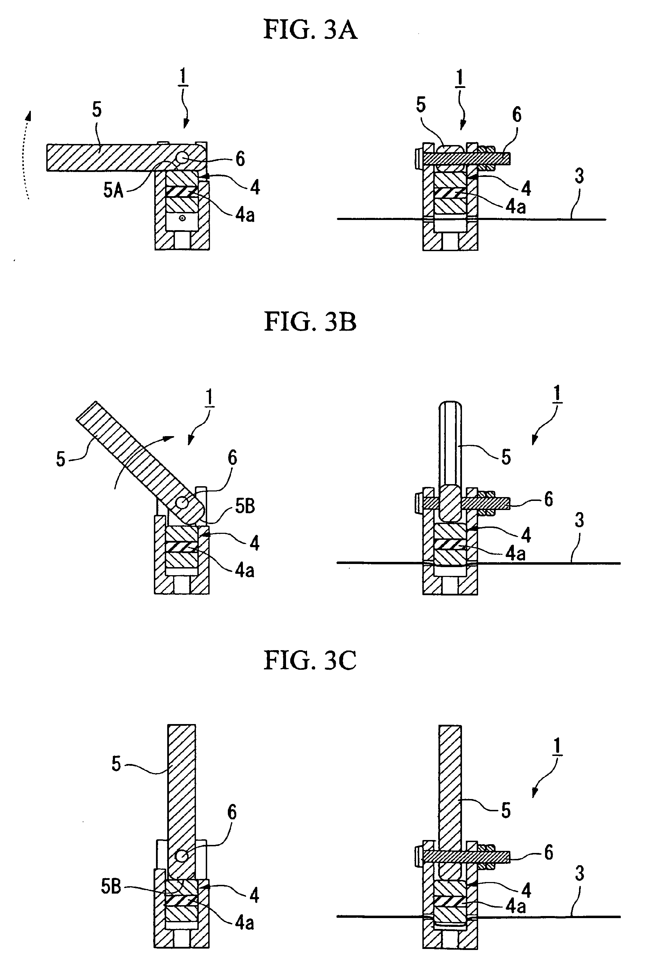

The piston 4 is formed of mainly a metal material such as stainless steel, and has a resilient body adapted to deform upon contact with the wire 3. Specifically, a structure is employed in which a rubber layer 4a as the resilient body is provided between stainless steel members (see FIG. 3).

Thus, when the piston 4 pushes the wire 3 into the case 2, the resilient body (the rubber layer 4a) can deform to reduce damage to the wire 3 and securely fix the wire 3.

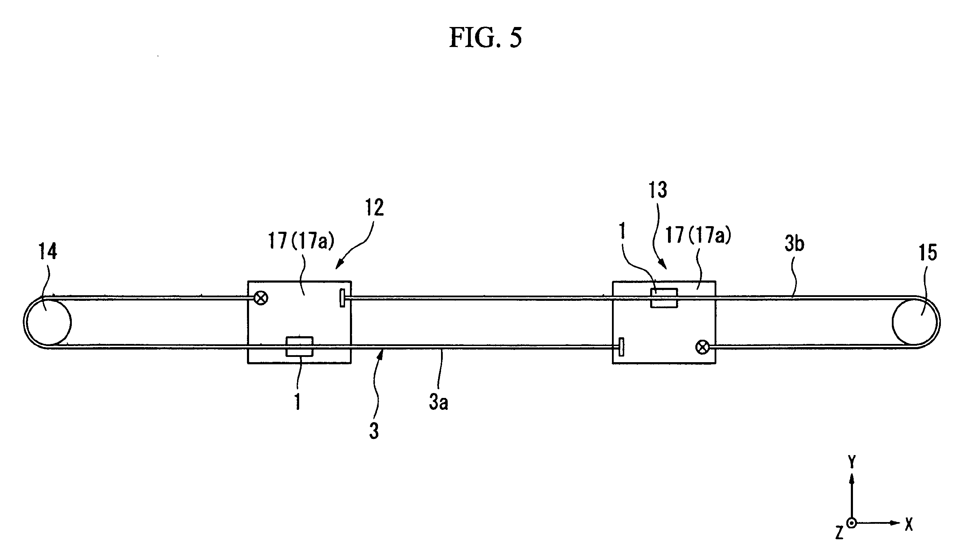

Operations of the clamp mechanism 1 according to an exemplary embodiment of the present invention will now be described. FIGS. 3A to 3C are views for explaining the operation of the clamp mechanism 1. FIG. 3A shows a normal state (when the wire 3 is open) in the clamp mechanism 1, FIG. 3B shows a pushed-up state of the lever 5 in the clamp mechanism 1, and FIG. 3C shows a locked state in the clamp mechanism 1. In FIGS. 3A to 3C, left figures show movement of the lever 5, and right figures show movement of the piston 4 and the wire 3 corresponding to the movement of the lever 5 when viewed from a Y-axis direction (see FIG. 5) in the left views.

First, the normal state of the clamp mechanism 1 will be described with reference to FIG. 3A. Here, the normal state means a state in which the wire 3 is not fixed by the piston 4, and the case 2 can move relative to the wire 3. In the normal state, the first surface 5A of the lever 5 abuts the piston 4, as shown in FIG. 3A. In this state, the wire 3 is disposed at an opposite side of the lever 5 in the piston 4.

In this case, the wire 3 is located with being separated from the piston 4. This prevents abrasion from occurring as the piston 4 received in the case 2 rubs against the wire 3 when the case 2 moves relative to the wire 3, or friction resistance from being created upon movement.

A state when the lever 5 is pushed up will now be described with reference to FIG. 3B. The contact surface (i.e., abutting surface) of the clamp mechanism 1 with the piston 4 is shifted from the first surface 5A to the second surface 5B as the lever 5 is pushed up. In this case, since the angled part 9 of the lever 5 is rounded by round chamfering as shown in FIG. 2, the contact surface of the lever 5 with the piston 4 can be smoothly switched between the first surface 5A and the second surface 5B.

As described above, the lever 5 is set such that the distance L1 from the first surface 5A to the hole 6a is greater than the distance L2 from the second surface 5B to the hole 6a (L1>L2). Accordingly, as the lever 5 is pushed up, the contact surface of the lever 5 with the piston 4 is shifted from the first surface 5A to the second surface 5B so that the piston 4 is gradually pushed into the case 2 by the lever 5.

The wire 3 is disposed at a side of a lower surface of the piston 4 (i.e., at an opposite side of the lever 5), as described above. Accordingly, the piston 4 pushed into the case 2 is in contact with the wire 3.

Accordingly, the wire 3 is pushed into the case 2 by the piston 4, as shown in FIG 3B.

A state in which the lever 5 is locked will now be described with reference to FIG. 3C. In a position rotated 90° from the position of the lever 5 in the normal state shown in FIG. 3A, the second surface 5B of the lever 5 becomes the contact surface with the piston 4. At this time, the wire 3 is pushed into the case 2 and fixed thereto (the lock state). Here, the lock state means a state in which movement of the wire 3 relative to the case 2 is restricted.

Thus, as the lever 5 is operated to the lock state, the case 2 and the movable body T connected to the case 2 are fixed (clamped) to the wire 3.

As described above, in the clamp mechanism 1 according to an exemplary embodiment of the present invention, the movement of the case 2 relative to the wire 3 can be restricted by operating the lever 5 to push the wire 3 into the case 2. Thus, movement of the movable body T, which moves relative to the wire together with the case 2, can also be conveniently and securely fixed by the operation of the lever 5.

In addition, in the clamp mechanism 1 according to an exemplary embodiment of the present invention, the wire 3 is provided at a side of the lever 5 with respect to the movable body T, as described above (see FIG. 1). If the movable body T has sliders that slidably move on rails as described below, the wire 3 is disposed at a surface of the sliders opposite to the rails, thereby achieving a convenient exchange task for the wire 3 and an excellent maintenance property thereof.

### (Slider Mechanism)

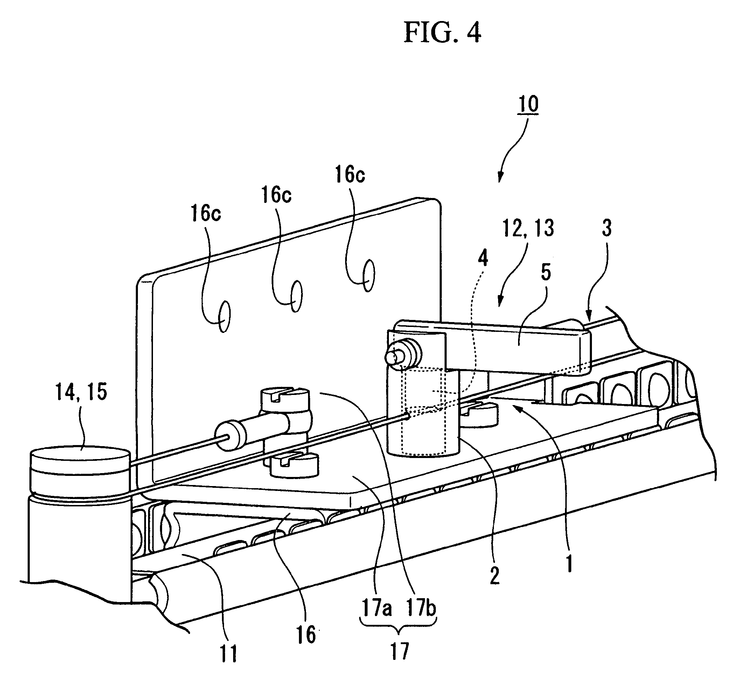

FIG. 4 illustrates primary components of the slider mechanism in accordance with the present invention. FIG. 5 illustrates an entire structure of a slider mechanism in accordance with an exemplary embodiment of the present invention. The slider mechanism according to an exemplary embodiment of the present invention is applied to a table of the present invention, which will be described below.

In the slider mechanism 10, a pair of sliders, i.e., first slider 12 and second sliders 13 are slidably provided on a shaft of a slide rail 11, as shown in FIG. 5. In the present embodiment, each of the first slider 12 and the second slider 13 includes the clamp mechanism 1.

Each of the first and second sliders 12 and 13 includes a base 16 that slidably moves on the shaft of the slide rail 11, and a slide plate 17 provided on the base 16, as shown in FIG 4. The slide plate 17 includes a base attachment part 17a attached to the base 16 by, for example, bolts, and an extension part 17b extending from the base attachment part 17a in a perpendicular direction (a Z-axis direction of FIG. 5). The extension part 17b has holes 16c through which bolts, etc., are inserted when the extension part 17b is attached to the table, as described later.

In addition, slide balls are provided between the base 16 and the slide rail 11 and function as the movable body T so that the base 16 can smoothly move relative to the slide rail 11.

As shown in FIG. 5, the first and second sliders 12 and 13 are connected to each other by the wire 3, such that a space between the first slider 12 and the second slider 13 can increase or decrease in a synchronized state. The wire 3 is slidably provided at cutout portions of wire support shafts provided at both ends of the slide rail 11. For the convenience of description, a first slider 12 side is referred to as a first wire support shaft 14, and a second slider 13 side is referred to as a second wire support shaft 15.

In the present embodiment, the wire 3 includes a first wire 3a and a second wire 3b. The first wire 3a is fastened to a first wire support shaft 14 side (a left side in an X-axis direction of FIG. 5) of the first slider 12 by a bolt. The first wire 3a is pulled and wound around the first wire support shaft 14 counterclockwise. The first wire 3a is passed over the base attachment part 17a of the first slider 12, and then fastened to the first slider 12 side of the second slider 13 by, for example, a bolt.

Meanwhile, the second wire 3b is fastened to a second wire support shaft 15 side (a right side in the X-axis direction of FIG. 5) of the second slider 13 by a bolt. The second wire 3b is pulled and wound around the second wire support shaft 15 counterclockwise. The second wire 3b is passed over the base attachment part 17a of the second slider 13, and then fastened to the first slider 12 side of the second slider 13 by, for example, a bolt.

That is, the first slider 12 and the second slider 13 are connected to each other in a ring shape through the wire 3 (i.e., the first wire 3a and the second wire 3b). The wire 3 is supported by the first wire support shaft 14 and the second wire support shaft 15, so that the first slider 12 and the second slider 13 can move on the slide rail 11 in a synchronized state and the space between the first slider 12 and the second sliders 13 can increase or decrease, as described below.

As described above, the slider mechanism 10 according to the exemplary embodiment of the present invention includes the clamp mechanism 1 provided in each of the first slider 12 and the second slider 13. As shown in FIG. 4, the case 2 of the clamp mechanism 1 is connected onto the base attachment part 17a of the base 16. In addition, the piston 4 is provided in the case 2 to be raised or lowered by the lever 5. The wire 3 (the first wire 3a) passes through the case 2 to maintain the clamp mechanism 1 in a clamp state so that the wire 3 (the first wire 3a) can be pulled into the case 2 to be fixed thereto. While FIG. 5 shows the structure of only the clamp mechanism 1 provided for the first slider 12, the clamp mechanism 1 provided for the second slider 13 has the same structure.

That is, in the present embodiment, since the case 2 through which the wire 3 passes is connected to the base attachment part 17a of the base 16, the wire 3 is positioned at a side of an upper surface of the base attachment part 17a. Accordingly, the wire 3 is disposed on a surface of the first slider 12 and the second slider 13 opposite to the slide rail 11.

Operations of the slider mechanism 10 will now be described. As described above, the first slider 12 and the second slider 13 can slidably move on the shaft of the slide rail 11 in a synchronized state, as shown in FIG. 5.

Specifically, if the first slider 12 moves leftward in the X-axis direction of FIG. 5, the second wire 3b also moves in a movement direction of the first slider 12. At this time, the second slider 13 moves rightward in the X-axis direction through the second wire 3b. As a result, the first slider 12 and the second slider 13 move in a state in which the first slider 12 and the second slider 13 are spaced apart from each other (at an expanded state). The same applies to a case in which the second slider 13 moves rightward in the X-axis direction of FIG. 5.

Meanwhile, when the first slider 12 moves rightward in the X-axis direction of FIG. 5, the second slider 13 moves leftward in the X-axis direction through the second wire 3b. As a result, the first slider 12 and the second slider 13 move in a state in which the first slider 12 and the second slider 13 are close to each other (in a contracted state). The same applies to a case in which the second slider 13 is moved leftward in the X-direction of FIG. 5.

As described above, according to the present embodiment, it is possible to provide the slider mechanism 10 including the pair of sliders 12 and 13 slidably on the shaft of the slider rail 11 to increase or decrease the space between the sliders 12 and 13 in a synchronized state. In addition, according to the slider mechanism 10, since the wire 3 is disposed on a surface of the sliders 12 and 13 opposite to the slide rail 11 (at a side of the base attachment part 17a) as described above, the wire 3 can be conveniently exchanged with a new one. This achieves good maintenance of the slide mechanism 10, thereby providing a slide mechanism with an excellent maintenance property.

### (Table)

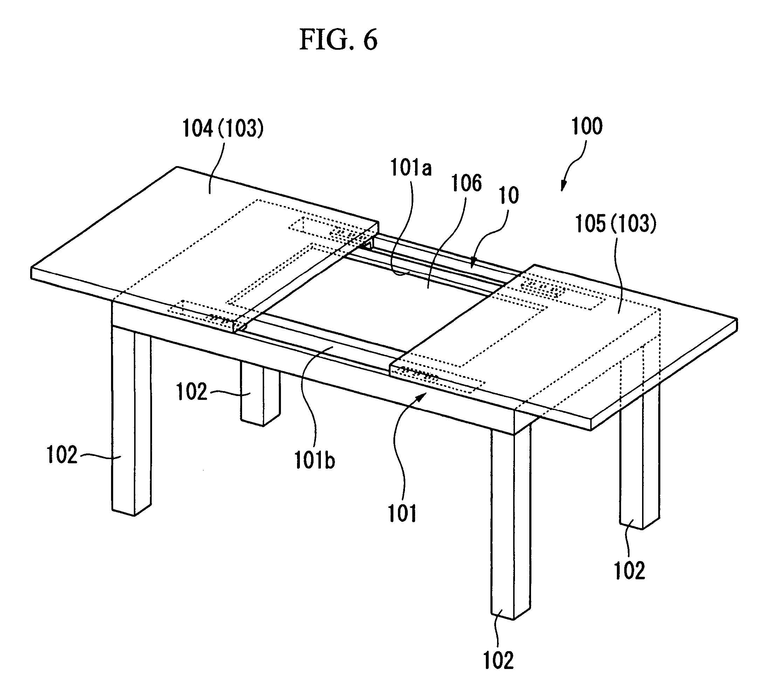

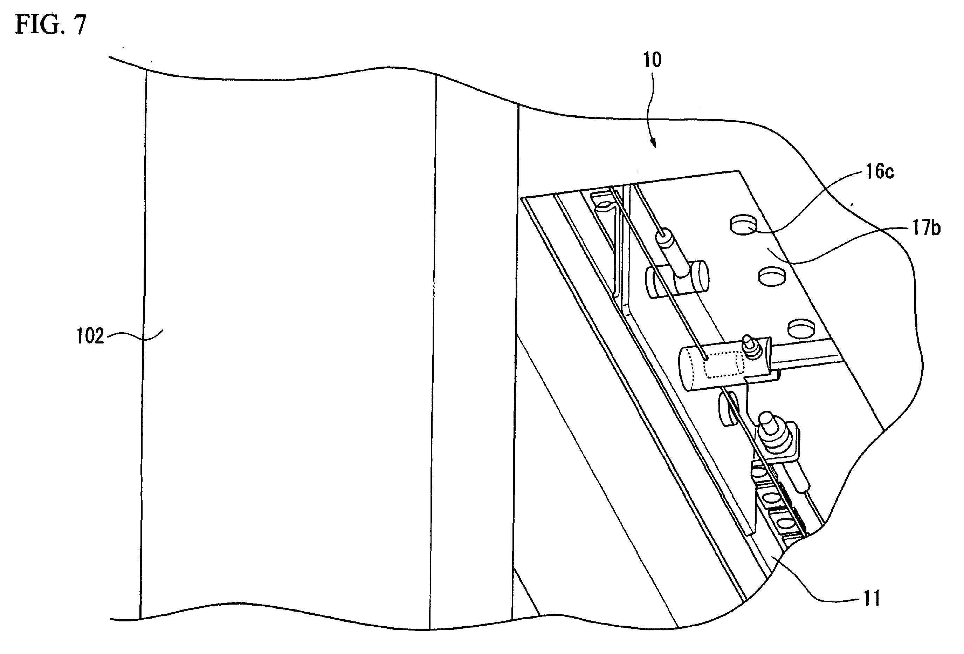

FIG. 6 illustrates a structure of a table to which the clamp mechanism of the present invention is applied, and FIG. 7 illustrates the table when seen from below.

The table 100 includes a table body 101, four legs 102 for supporting the table body 101, and a top plate unit 103 provided on the table body 101. The top plate unit 103 includes first and second top plates 104 and 105 provided on the table body 101, and a third top plate 106 received in a recess 101a formed in a substantially center portion of the table body 101. The first top plate 104 has substantially the same size as the second top plate 105, and a total area of the two plates is equal to an area of an upper surface of the table body 101.

In addition, two trenches 101b having a slit shape are formed at peripheral parts along long sides of the table body 101 so as to interpose the recess 101a therebetween. The table body 101 includes the respective slider mechanisms 10 in the trenches 101b.

As shown in FIG. 7, in the slider mechanism 10, the slide rail 11 is fixed to a side surface of the trench 101b by bolts, and in the first slider 12 and the second slider 13 slidable on the shaft of the slide rail 11, the extension part 17b of the slide plate 17 is disposed at the upper surface of the table body 101. In addition, in FIG. 7, movement of the slider is restricted by the clamp mechanism 1.

Further, the first top plate 104 or the second top plate 105 is connected to the extension part 17b. Both ends of the first top plate 104 and the second top plate 105 are maintained in the slider mechanisms 10, respectively, so that the first top plate 104 and the second top plate 105 can move on the table body 101 in a synchronized state.

Furthermore, the third top plate 106 is received in the recess 101a of the table body 101 such that an upper surface of the third top plate 106 is not in contact with the first top plate 104 and the second top plate 105. In addition, a rotary mechanism and a lift mechanism (not shown) are provided at the third top plate 106 such that the third top plate 106 is simultaneously raised and rotated 90° to be disposed on the table body 101 when the first top plate 104 and the second top plate 105 move to predetermined positions as described below. Further, the length of the long side of the third top plate 106 corresponds to the length of the short side of the table body 101.

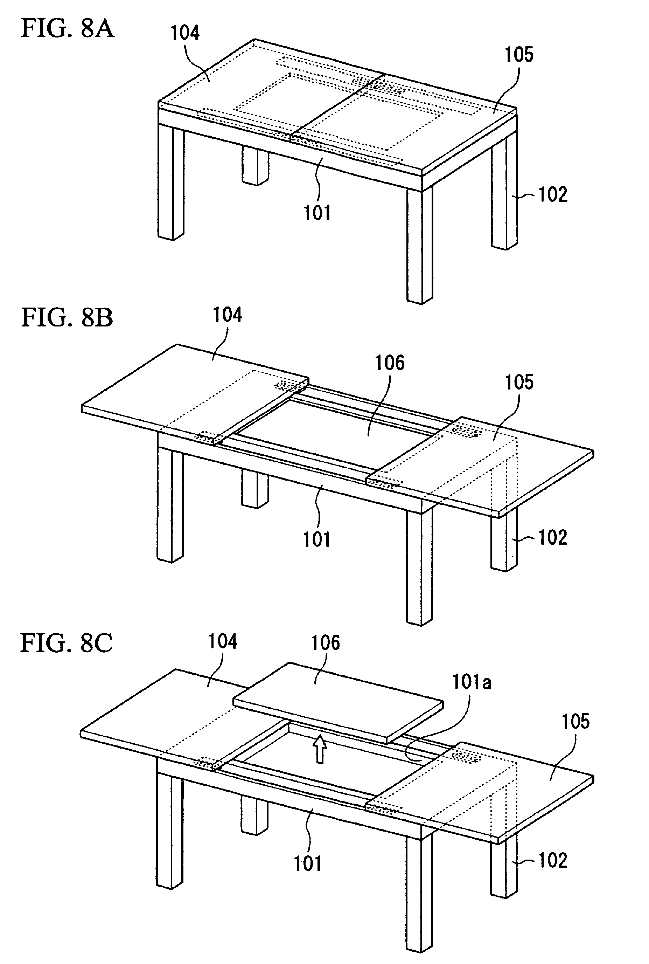

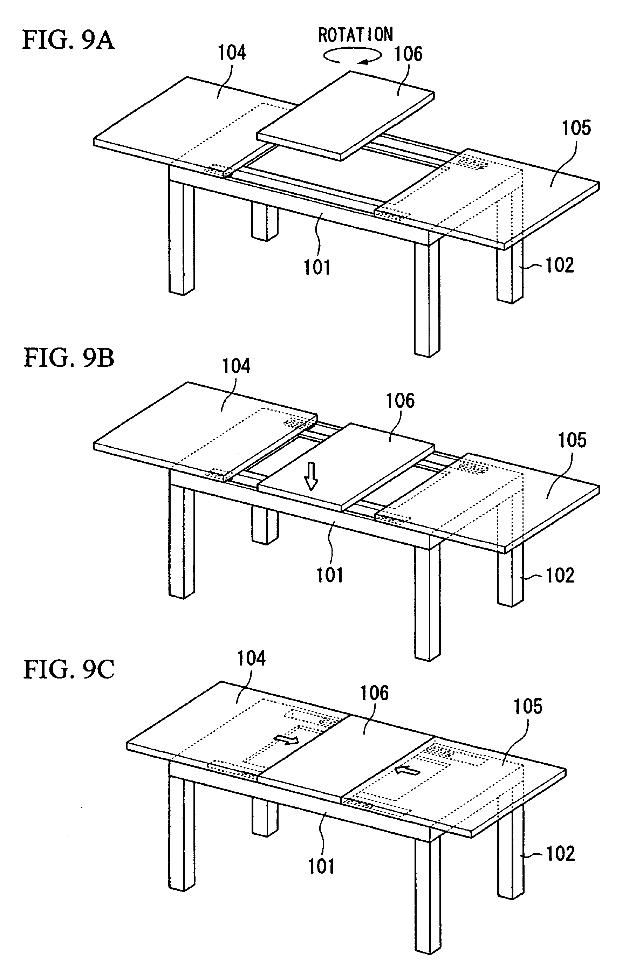

Next, the operation of the table 100 will be described with reference to FIGS. 8 and 9.

First, in an initial state, the first top plate 104 and the second top plate 105 are disposed on the table body 101 in a closed state, as shown in FIG. 8A. Then, any one of the first top plate 104 and the second top plate 105 is pulled outward, as shown in FIG. 8B. At this time, since the slider mechanisms 10 are provided at the first top plate 104 and second top plate 105, the first and second top plates 104 and 105 move away from each other in a synchronized state so that a space between the first top plate 104 and second top plate 105 increases and the third top plate 106 received in the recess 101a appears.

Next, the third top plate 106 is raised by the lift mechanism (not shown). At this time, the third top plate 106 may be raised to a position at which the third top plate 106 is not in contact with the first top plate 104 and the second top plate 105. Accordingly, it is possible to minimize a moving distance of the first top plate 104 and the second top plate 105.

Next, the third top plate 106 is rotated 90° by the rotary mechanism (not shown), as shown in FIG. 9A. Then, the third top plate 106 is lowered by the lift mechanism (not shown) to be disposed between the first top plate 104 and the second top plate 105, as shown in FIG. 9B. Since the third top plate 106 has the long side length equal to the short side length of the table body 101 as described above, the third top plate 106 can be suitably disposed on the table body 101. Next, as shown in FIG. 9C, the slider mechanisms 10 reduces the space between the first top plate 104 and the second top plate 105 so that the third top plate 106 is disposed between the first and second top plates 104 and 105.

According to the above operation, an effective area of the table 100 can be increased by the area of the third top plate 106. Accordingly, it is possible to realize a high performance table 100 capable of increasing the effective area, without deterioration of design characteristics, if necessary.

In addition, the table 100 in accordance with an exemplary embodiment of the present invention includes the slider mechanism 10 shown in FIG. 7. Since the slider mechanism 10 includes the wire 3 that can be conveniently exchanged to provide a good maintenance property, it is possible to increase the value-added competitiveness of the table 100.

The present invention is not limited to the above embodiments but may be varied in various ways without departing from the scope of the present claims. For example, the piston 4 may not include a resilient body such as rubber for example. Further, while the slider mechanisms 10 in accordance with an exemplary embodiment of the present invention are provided at each of the first slider 12 and the second slider 13, the slider mechanism 10 may be provided to only one of the sliders 12 and 13.

While the table 100 according to the above embodiment includes the two slider mechanisms 10 provided at the table body 101, the slider mechanism 10 may be provided at any one of the trenches 101b. In this case, projections may be provided at the first and second top plates 104 and 105 and slidably move in the trenches 101b in which the slider mechanisms 10 are not provided.

### INDUSTRIAL APPLICABILITY

As described above, the present invention can provide a clamp mechanism and a slider mechanism with an excellent maintenance property and high reliability.

## Claims

1. A clamp mechanism (1) comprising:
a case (2);
a lever (5); and
a piston (4) which is provided to be raised or lowered in the case (2), and moves in the case (2) according to an operation of the lever (5) wherein
the case (2) is connected to a movable body (T),
**characterised in that**
the clamp mechanism (1) further comprises a wire (3) passing through the case (2),
the wire (3) is provided between the movable body (T) and the piston (4) inside the case (2),
such that the wire (3) is able to be deformed by pushing the piston (4) into the case (2) and is able to be pushed toward the side of the movable body (T) inside the case (2) so as to keep a relative position between the movable body (T) and the wire (3).

2. A slider mechanism (10) comprising a pair of sliders (12, 13) slidably provided on a rail (11), and having a space there-between capable of increasing or decreasing in a synchronized state, wherein
at least one of the sliders (12, 13) has a clamp mechanism (1),
the clamp mechanism (1) comprises ;
a case (2) connected to the slider (12, 13);
a wire (3) passing through the case (2),
a lever (5); and
a piston (4) which is provided to be raised or lowered in the case (2), and moves in the case (2) according to an operation of the lever (5),
the wire (3) is provided between the movable body (T) and the piston (4) inside the case (2),
such that the wire (3) is able to be deformed by pushing the piston (4) into the case (2) and is able to be pushed toward the side of the movable body (T) inside the case (2) so as to keep a relative position between the movable body (T) and the wire (3).

3. The slider mechanism (10) according to claim 2, wherein the lever (5) comprises a first surface (5A) which abuts the piston (4) to maintain the piston (4) at a clamp position of the wire (3), and a second surface (5B) which maintains the piston (4) at a non-clamp position of the wire (3), and a transition part between the first surface (5A)and the second surface (5B) is formed in a rounded shape so that the piston (4) slidably moves between the first surface (5A) and the second surface (5B).

4. The slider mechanism (10) according to claim 2 or 3, wherein the piston (4) comprises a resilient body (4a) deformed upon contact with the wire (3).

## Patentansprüche

1. Klemmmechanismus (1), der umfasst:
eine Verkleidung (2);
einen Hebel (5); und
einen Kolben (4), der in der Verkleidung (2) angehoben oder abgesenkt wird und sich in der Verkleidung (2) entsprechend einer Betätigung des Hebels (5) bewegt, wobei
die Verkleidung (2) mit einem beweglichen Körper (T) verbunden ist,
**dadurch gekennzeichnet, dass**
der Klemmmechanismus (1) des Weiteren einen Draht (3) umfasst, der durch die Verkleidung (2) hindurchtritt,
der Draht (3) im Inneren der Verkleidung (2) zwischen dem beweglichen Körper (T) und dem Kolben (4) vorhanden ist,
so dass der Draht (3) verformt werden kann, wenn der Kolben (4) in die Verkleidung (2) hinein gedrückt wird, und im Inneren der Verkleidung (2) zu der Seite des beweglichen Körpers (T) gedrückt werden kann, um eine relative Position des beweglichen Körpers (T) und des Drahtes (3) zueinander aufrechtzuerhalten.

2. Schiebemechanismus (10), der ein Paar Schieber (12, 13) umfasst, die auf einer Schiene (11) verschoben werden können und zwischen denen ein Zwischenraum vorhanden ist, der in einem synchronisierten Zustand vergrößert oder verkleinert werden kann, wobei wenigstens einer der Schieber (12, 13) einen Klemmmechanismus (1) aufweist,
und der Klemmmechanismus (1) umfasst:
eine Verkleidung (2), die mit dem Schieber (12, 13) verbunden ist,
einen Draht (3), der durch die Verkleidung (2) hindurchtritt,
einen Hebel (5); sowie
einen Kolben (4), der in der Verkleidung (2) angehoben oder abgesenkt wird und sich in der Verkleidung (2) entsprechend einer Betätigung des Hebels (5) bewegt,
der Draht (3) im Inneren der Verkleidung (2) zwischen dem beweglichen Körper (T) und dem Kolben (4) vorhanden ist,
so dass der Draht (3) verformt werden kann, wenn der Kolben (4) in die Verkleidung (2) hinein gedrückt wird, und im Inneren der Verkleidung (2) zu der Seite des beweglichen Körpers (T) gedrückt werden kann, um eine relative Position des beweglichen Körpers (T) und des Drahtes (3) zueinander aufrechtzuerhalten.

3. Schiebemechanismus (10) nach Anspruch 2, wobei der Hebel (5) eine erste Fläche (5A), die an dem Kolben (4) anliegt, um den Kolben (4) in einer Position zu halten, in der der Draht (3) festgeklemmt ist, sowie eine zweite Fläche (5B) umfasst, die den Kolben (4) in einer Position hält, in der der Draht (3) nicht festgeklemmt ist, und ein Übergangsteil zwischen der ersten Fläche (5A) und der zweiten Fläche (5B) in einer abgerundeten Form ausgebildet ist, so dass sich der Kolben (4) gleitend zwischen der ersten Fläche (5A) und der zweiten Fläche (5B) bewegen kann.

4. Schiebemechanismus (10) nach Anspruch 2 oder 3, wobei der Kolben (4) einen elastischen Körper (4a) umfasst, der bei Kontakt mit dem Draht (3) verformt wird.

## Revendications

1. Mécanisme de blocage (1) comprenant :
- une enveloppe (2) ;
- un levier (5) ; et
- un piston (4) prévu pour être élevé ou abaissé dans l'enveloppe (2) et se déplaçant dans l'enveloppe (2) suivant un actionnement du levier (5),
- dans lequel :
- l'enveloppe (2) est connectée à un corps mobile (T),
- **caractérisé en ce que** :
- le mécanisme de blocage (1) comprend en outre un câble (3) traversant l'enveloppe (2) ;
- le câble (3) est disposé entre le corps mobile (T) et le piston (4) à l'intérieur de l'enveloppe (2),
- de sorte que le câble (3) soit susceptible d'être déformé en poussant le piston (4) dans l'enveloppe (2) et soit susceptible d'être poussé vers le côté du corps mobile (T) à l'intérieur de l'enveloppe (2) de façon à garder une position relative entre le corps mobile (T) et le câble (3).

2. Mécanisme de coulissement (10) comprenant une paire de coulisses (12, 13) disposées de façon coulissante sur un rail (11) et comportant un espace entre elles susceptible de croitre ou de décroitre dans un état synchronisé, dans lequel :
- au moins une des coulisses (12, 13) comporte un mécanisme de blocage (1) ;
- ce mécanisme de blocage (1) comprend :
- une enveloppe (2) connectée à la coulisse (12, 13) ;
- un câble (3) traversant l'enveloppe (2) ;
- un levier (5) ; et
- un piston (4) prévu pour être élevé ou abaissé dans l'enveloppe (2) et se déplaçant dans l'enveloppe (2) suivant un actionnement du levier (5) ;
- le câble (3) est disposé entre le corps mobile (T) et le piston (4) à l'intérieur de l'enveloppe (2),
- de sorte que le câble (3) soit susceptible d'être déformé en poussant le piston (4) dans l'enveloppe (2) et soit susceptible d'être poussé vers le côté du corps mobile (T) à l'intérieur de l'enveloppe (2) de façon à garder une position relative entre le corps mobile (T) et le câble (3).

3. Mécanisme de coulissement (10) selon la revendication 2, dans lequel le levier (5) comprend une première surface (5A) venant en butée contre le piston (4) afin de maintenir le piston (4) en une position de blocage du câble (3) et une seconde surface (5B) maintenant le piston (4) en une position de non-blocage du câble (3) et une partie de transition entre la première surface (5A) et la seconde surface (5B) est conformée en une forme arrondie de sorte que le piston (4) se déplace de façon coulissante entre la première surface (5A) et la seconde surface (5B).

4. Mécanisme de coulissement (10) selon les revendications 2 ou 3, dans lequel le piston (4) comprend un corps résilient (4a) déformé lors d'un contact avec le câble (3).
